(19) **Europäisches Patentamt**
**European Patent Office**
**Office européen des brevets**

(11) **EP 4 077 433 B1**

(12) **EUROPEAN PATENT SPECIFICATION**

(45) Date of publication and mention
of the grant of the patent:
**24.07.2024 Bulletin 2024/30**

(21) Application number: **20829875.2**

(22) Date of filing: **16.12.2020**

(51) International Patent Classification (IPC):
**C08F 279/04** *(2006.01)*     **C08L 25/12** *(2006.01)*
**C08L 55/02** *(2006.01)*     **C08F 6/00** *(2006.01)*
**C08F 285/00** *(2006.01)*

(52) Cooperative Patent Classification (CPC):
(C-Sets available)
**C08F 279/04; C08F 2/001; C08F 6/006;**
**C08F 285/00; C08L 25/12; C08L 55/02**     (Cont.)

(86) International application number:
**PCT/EP2020/086352**

(87) International publication number:
**WO 2021/122694 (24.06.2021 Gazette 2021/25)**

(54) **DUAL INITIATOR GRAFTING PROCESS OF POLYBUTADIENE LATEX BY STYRENE/ACRYLONITRILE**

DUALES INITIATOR-PFROPFVERFAHREN VON POLYBUTADIENLATEX DURCH STYROL/ACRYLNITRIL

PROCÉDÉ DE GREFFAGE DE LATEX DE POLYBUTADIÈNE À DOUBLE AMORCEUR PAR STYRÈNE/ACRYLONITRILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2019 EP 19216874**

(43) Date of publication of application:
**26.10.2022 Bulletin 2022/43**

(73) Proprietor: **INEOS Styrolution Group GmbH**
**60325 Frankfurt am Main (DE)**

(72) Inventors:
• **NIESSNER, Norbert**
**67159 Friedelsheim (DE)**
• **MICHELS, Gisbert**
**51375 Leverkusen (DE)**
• **HONEKER, Roman**
**50737 Köln (DE)**
• **MADHAV, Shridhar**
**doda Va ra 390002 (IN)**
• **GEVARIA, Kirit**
**doda Va ra 390008 (IN)**

• **BHARADWAJ, Pankaj**
**Uttar Pradesh Kheri Pin-262802 (IN)**
• **SINGH, Prabhat**
**Tragad Ahmedabad 382470 (IN)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**CN-A- 101 104 666**     **KR-A- 20120 032 668**
**US-A1- 2002 111 435**     **US-A1- 2007 123 657**
**US-B1- 6 489 379**

(52) Cooperative Patent Classification (CPC): (Cont.)

C-Sets
**C08F 6/006, C08L 25/12;**
**C08F 6/006, C08L 55/02;**
**C08L 25/12, C08L 55/02;**
**C08L 55/02, C08L 25/12**

**EP 4 077 433 B1**

**Description**

The invention discloses an emulsion polymerization process for the preparation of acrylonitrile-styrene-butadiene (ABS) graft copolymer latexes having considerably reduced residual monomer content, ABS graft copolymers obtained by said process, thermoplastic molding compositions comprising it, and the use, in particular in the automotive industry.

In the automotive market, the application of ABS plastic materials is increasing year by year, especially in the four-wheeler auto sector. Owing to the exceptional properties of ABS plastic materials, automotive manufacturers mostly prefer it for both interior as well as exterior applications. ABS molding compositions are used for variety of automotive application because it provides balanced characteristics of impact strength, dimensional stability, flowability, chemical resistance and heat resistance, which normally other general-purpose thermoplastics cannot deliver. ABS molding compositions are used for many interior auto-components and thus a low content of volatile organic compounds (VOC) is desirable and required from the automobile manufacturers, in particular in the four-wheeler auto sector. There are legal and environmental regulations and stringent laws prevailing in most of the European countries related to VOC of interior parts used for automobiles.

In general, most manufacturers of ABS graft copolymers follow the emulsion polymerization method nowadays. It is known that ABS graft copolymers obtained by emulsion polymerization retain a higher amount of residual, unreacted monomers in comparison to ABS graft copolymers obtained by mass polymerization, but emulsion polymerized ABS graft copolymers have the advantage of better mechanical properties.

In emulsion technique, in order to reduce residual monomers, the reaction has to achieve a higher conversion. However, beyond a certain level due to higher crosslinking, mechanical properties especially impact properties are highly affected. An alternative route mostly followed is to add monomer scavenging chemicals or additives in the polymerization stage or later. However, these chemicals can also have impact on the final properties of the product and lead to additional cost of production.

US 4,301,264 discloses a process for reducing the residual styrene monomer content of ABS polymer dispersions. In said process, at first an ABS latex is prepared by grafting styrene and acrylonitrile (SAN) on to a polybutadiene latex by emulsion polymerization using a redox initiator based on cumene hydroperoxide. Then, after a polymerization conversion of at least 90% in a separate vessel, an activated cumene hydroperoxide is added to the obtained ABS latex which is followed by a heat treatment.

US 7,897,686 describes a method for preparing an acrylonitrile-butadienestyrene (ABS) graft rubber latex having a low residual monomer content of up to 5000 ppm. The graft rubber latex is obtained by grafting SAN on to a polybutadiene rubber latex (particle size of 250 to 500 nm) in an emulsion polymerization. In the graft copolymerization, in a first step, 10 to 30 wt.-% of the comonomer mixture together with a polystyrene or SAN-copolymer latex (particle size 20 to 100 nm) are added with an initiator (I-1); then, in a second step, 70 to 90 wt.-% of the comonomer mixture are added with further initiator (I-2). When the conversion rate of the polymerization is at least 94 %, in a third step, a redox polymerization initiator (I-3) is additionally added. Initiator (I-1) is preferably a redox initiator based on t-butylhydroperoxide; initiator (I-2) is preferably cumenehydro peroxide, and redox initiator (I-3) is preferably based on cumenehydro peroxide.

US 2002/0111435 describes a process for the preparation of ABS graft rubber polymers having reduced residual monomer content. The graft rubber latex is obtained by emulsion polymerization of SAN co-monomers in presence of a polybutadiene rubber latex according to a fed batch process, wherein the initiator or the initiator (redox) system is added to the reaction mixture in specific portions within certain time intervals. Preferred initiators are peroxodisulfates, as well as organic hydroperoxides. In the examples either a redox initiator based on tert-butyl hydroperoxide, or potassium peroxodisulfate has been used as initiator.

Even though the residual monomer content of the ABS graft rubber copolymers obtained by said prior art processes is reduced, their mechanical properties are often still in need of improvement.

It is one objective of the invention to provide an improved process for the preparation of an acrylonitrile-styrenebutadiene (ABS) graft copolymer by emulsion polymerization which does not alter any conditions or parameters of the butadiene rubber latex preparation and wherein no additional residual monomer scavengers (e.g. amines such as aryl(methylene amine)$_{1-3}$, dialkyl amines, bisulphate or sulphite salts, thiols etc.) or such additives are added. Moreover, such a process shall be provided in which the entire grafting of the butadiene rubber latex with the graft monomers can be carried out in one reactor. ABS graft copolymers obtained by said process shall have a reduced residual monomer content (range preferably 3000-4000 ppm) and further ABS molding compositions comprising said ABS graft copolymers have good mechanical properties.

The object of the invention is achieved by providing a process and a graft rubber copolymer obtained by said process in accordance with the claims.

Thus, one subject of the invention is a process for the preparation of a graft rubber copolymer (A), which process comprises the following steps:

3

a) emulsion polymerization of butadiene or a mixture of butadiene and at least one monomer copolymerizable with butadiene to obtain at least one starting butadiene rubber latex (S-A1) having a median weight particle diameter $D_{50}$ of equal to or less than 120 nm;

b) subjecting of said at least one starting butadiene rubber latex (S-A1) to agglomeration, preferably by use of an organic acid, more preferably organic acid anhydride, to obtain at least one agglomerated butadiene rubber latex (A1) with a median weight particle diameter $D_{50}$ of 150-2000 nm (= graft substrate);

c) grafting of said at least one agglomerated butadiene rubber latex (A1) by emulsion polymerization of styrene and acrylonitrile, preferably in a weight ratio of 95:5 to 65:35, in presence of at least one agglomerated butadiene rubber latex (A1) to obtain a graft rubber copolymer (A) at a temperature of 40 to 90°C,

it being possible for styrene and/or acrylonitrile to be replaced partially (less than 50 wt.-%) by alpha-methylstyrene, methyl methacrylate, maleic anhydride or N-phenylmaleimide or mixtures thereof;

wherein step c) comprises sub-steps c1), c2) and c3):

c1) sludge feeding:

- feeding of 10 to 45 wt.-%, preferably 20 to 40 wt.-%, more preferably 25 to 30 wt.-% of styrene and acrylonitrile - based on the total amount styrene and acrylonitrile - in one portion to the at least one agglomerated butadiene rubber latex (A1), and
- addition of 0.01 to 0.06 parts by weight of at least one redox system initiator (I-1) selected from hydrogen peroxide or at least one organic peroxide - based on 100 parts by weight of styrene and acrylonitrile and agglomerated butadiene rubber latex (A1) -, then - after addition of initiator (I-1)) -
- polymerization for 30 to 90 minutes to obtain a reaction mixture (RM-c1);

c2) incremental feeding:
then, preferably within 5 hours, more preferably within 3 hours, to the reaction mixture obtained in step c1),

- feeding the remaining amount of styrene and acrylonitrile - based on the total amount of styrene and acrylonitrile - in portions (preferably equally divided portions fed in regular intervals) or continuously, and
- further addition of 0.05 to 0.12 parts by weight of said at least one redox system initiator (I-1) - based on 100 parts by weight of styrene and acrylonitrile and agglomerated butadiene rubber latex (A1) - to obtain a reaction mixture (RM-c2);

c3) boost addition:
then, to the reaction mixture obtained in step c2),

- addition of 0.05 to 0.40 parts by weight - based on 100 parts by weight of styrene and acrylonitrile and agglomerated butadiene rubber latex (A1) - of at least one inorganic free radical initiator (I-2), in particular inorganic per-salt, preferably alkali persulfate, more preferred potassium persulfate, and then
- continuation of the polymerization for 30 to 90 minutes to obtain graft rubber copolymer (A).

Wt.-% means percent by weight; pbw means parts by weight.

Butadiene means 1,3-butadiene.

In the context of steps c1), c2) and c3) the term "styrene and acrylonitrile" means styrene and acrylonitrile which independently can be partially (less than 50 wt.-%) replaced by alpha-methylstyrene, methyl methacrylate, maleic anhydride or N-phenylmaleimide or mixtures thereof as before defined in step c).

The median weight particle diameter $D_{50}$, also known as the $D_{50}$ value of the integral mass distribution is defined as the value at which 50 wt.-% of the particles have a diameter smaller than the $D_{50}$ value and 50 wt.-% of the particles have a diameter larger than the $D_{50}$ value. In the present application the weight-average particle diameter $D_w$, in particular the median weight particle diameter $D_{50}$, is determined with a disc centrifuge (e.g.: CPS Instruments Inc. DC 24000 with a disc rotational speed of 24 000 rpm).

The weight-average particle diameter $D_w$ is defined by the following formula (see G. Lagaly, O. Schulz and R. Ziemehl, Dispersionen und Emulsionen: Eine Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = \text{sum} \left( n_i * d_i^4 \right) / \text{sum} \left( n_i * d_i^3 \right)$$

$n_i$: number of particles of diameter $d_i$.

The summation is performed from the smallest to largest diameter of the particles size distribution. It should be mentioned that for a particles size distribution of particles with the same density which is the case for the starting rubber latices and agglomerated rubber latices the volume average particle size diameter Dv is equal to the weight average particle size diameter Dw.

Steps a) and b) of the process according to the invention are described e.g. in WO 2012/022710.

Preparation of starting butadiene rubber (S-A1)

In step a) of the process according to the invention butadiene, or a mixture of butadiene and at least one monomer co-polymerizable with butadiene, is polymerized by emulsion polymerization to obtain at least one starting butadiene rubber latex (S-A1) having a median weight particle diameter $D_{50}$ of equal to or less than 120 nm.

Step a) of the process of the invention is described e.g. in WO 2012/022710.

The term "butadiene rubber latex" means polybutadiene latices produced by emulsion polymerization of butadiene and less than 50 wt.-% (based on the total amount of monomers used for the production of polybutadiene polymers) of one or more monomers that are copolymerizable with butadiene as comonomers.

Examples for such monomers include isoprene, chloroprene, acrylonitrile, styrene, alpha-methylstyrene, $C_1$-$C_4$-alkylstyrenes, $C_1$-$C_8$-alkylacrylates, $C_1$-$C_8$-alkylmethacrylates, alkyleneglycol diacrylates, alkylenglycol dimethacrylates, divinylbenzol; preferred monomers are styrene and/or acrylonitrile, more preferably styrene.

Preferably, butadiene is used alone or mixed with up to 30 wt.-%, preferably up to 20 wt.-%, more preferably up to 15 wt.-% styrene and/or acrylonitrile, preferably styrene.

Preferably a mixture of butadiene with 1 to 30 wt.-%, preferably 3 to 20 wt.-%, more preferably 5 to 15 wt.-% styrene is used for the preparation of the starting butadiene rubber latex (S-A1). Preferably for the emulsion polymerization a plant based, in particular a resin acid-based, emulsifier is used. More preferably as emulsifier only resin-acid based emulsifiers are used in step a).

As resin acid-based emulsifiers, those are being used in particular for the production of the starting rubber latices by emulsion polymerization that contain alkaline salts of the resin acids. Salts of the resin acids are also known as resin soaps. Examples include alkaline soaps as sodium or potassium salts from disproportionated and/or dehydrated and/or hydrated and/or partially hydrated gum resin with a content of dehydroabietic acid of at least 30 wt.-% and preferably a content of abietic acid of maximally 1 wt.-%.

Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%.

Mixtures of the aforementioned emulsifiers can also be used for the production of the starting rubber latices. The use of alkaline soaps as sodium or potassium salts from disproportionated and/or dehydrated and/or hydrated and/or partially hydrated gum resin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm (median weight particle diameter $D_{50}$).

Suitable molecular-weight regulators for the production of the starting butadiene rubber latices(S-A1), include, for example, alkylmercaptans, such as n- dodecylmercaptan, tert-dodecylmercaptan, dimeric alpha-methylstyrene and terpinolene.

In step a) of the process according to the invention inorganic and organic peroxides, e.g. hydrogen peroxide, di-tert-butyl peroxide, cumene hydroperoxide, dicyclohexyl percarbonate, tert-butylhydroperoxide, p-menthanehydroperoxide, azo initiators such as azobisisobutyronitrile, inorganic per-salts such as ammonium, sodium or potassium persulfate, potassium perphosphate, sodium perborate as well as redox systems can be taken into consideration as initiators of the emulsion polymerization of butadiene or a styrene-butadiene mixture.

Redox systems generally consist of an organic oxidizing agent and a reducing agent, additional heavy-metal ions can be present in the reaction medium (see Houben-Weyl, Methoden d. Organischen Chemie, Volume 14/1, pp. 263 - 297).

Preferably at least one alkalipersulfate initiator, in particular potassium persulfate, is used in step a) of the process according to the invention.

More preferably butadiene, or a mixture of butadiene and at least one monomer copolymerizable with butadiene, is polymerized by emulsion polymerization using, in particular persulfates, in particular potassium persulfate, as an initiator and a resin-acid based emulsifier to obtain the starting butadiene rubber latices (S-A1).

Moreover, salts, acids and bases can be used in the emulsion polymerization for producing the starting rubber latices. With acids and bases the pH value, with salts the viscosity of the latices is adjusted during the emulsion polymerisation. Examples for acids include sulfuric acid, hydrochloric acid, phosphoric acid; examples for bases include sodium hydroxide solution, potassium hydroxide solution; examples for salts include chlorides, sulfates, phosphates as sodium or potassium salts. The preferred base is sodium hydroxide solution and the preferred salt is tetrasodium pyrophosphate. The pH value of the fine-particle rubber latices is between pH 7 and pH 13, preferably between 8 and pH 12, particularly preferably between pH 9 and pH 12. With respect to the optionally used salts it can be referred to in addition to those mentioned in US 2003/0139514, which include for example alkali salts such as alkali halides, nitrates, sulfates, phosphates, pyrophosphates, preferably tetrasodium pyrophosphate, sodium sulfate, sodium chloride or potassium chloride. The amount of the optional salt may include 0 to 2, preferred 0 to 1 weight- percent relative to the latex solids.

Polymerization temperature in the preparation of the starting butadiene rubber latices (S-A1) is generally 25°C to 160°C, preferably 40°C to 90°C. Work can be carried out under the usual temperature control, e.g. isothermally. It is also possible to carry out polymerization in such a way that the temperature difference between the beginning and the end of the reaction is at least 2 °C, or at least 5°C, or at least 10°C starting with a lower temperature.

It is possible to first provide all substances used, i.e. water, monomers, emulsifiers, molecular-weight regulators, initiators, bases, acids and salts at the beginning of polymerization. Furthermore, it is also possible to first provide only a part of the substances used at the beginning of the polymerization, and to first provide other substances used only partially, and to feed the remaining part during the polymerization.

It has proved to be advantageous to first provide only a part of the monomers and molecular-weight regulators up to 35% and to feed the largest part. Furthermore, it has proved advantageous to first provide the emulsifiers for the most part at least 65% or completely and to feed the remainder. Furthermore, it has proved advantageous to first provide the initiators, bases, acids and salts for the most part at least 65% or completely and to feed the remainder. Furthermore, it has proved advantageous to first provide water for the most part at least 50% or completely and to feed the remainder.

After the polymerization is finished the starting rubber latex can be cooled down to 50°C or lower and as far as the monomer conversion is not completed the not reacted monomers, e.g. butadiene can be removed by devolatilization at reduced pressure if necessary.

The at least one, preferably one, starting butadiene rubber latex (S-A1) preferably has a median weight particle diameter $D_{50}$ of equal to or less than 110 nm, particularly equal to or less than 90 nm.

The gel content of the starting rubber latices is preferably 30 to 98% by wt., preferably 50 to 95% by wt. based on the water unsoluble solids of said latices. The values indicated for the gel content are based on the determination according to the wire cage method in toluene (see Houben-Weyl, Methoden der Organischen Chemie, Makromolekulare Stoffe, part 1 , page 307 (1961 ) Thieme Verlag Stuttgart). The gel contents of the starting rubber latices can be adjusted in a manner known in principle by applying suitable reaction conditions (e.g., high reaction temperature and/or polymerization up to high conversion as well as, optionally, addition of substances with a cross-linking effect for achieving a high gel content, or, e.g., low reaction temperature and/or termination of the polymerization reaction prior to the occurrence of a cross-linkage that is too comprehensive as well as, optionally, addition of molecular-weight regulators such as, for example n-dodecylmercaptan or tert- dodecylmercaptan for achiev ing a low gel content).

The solid content of the starting rubber latices is preferably 25 to 55% by wt. (evaporation sample at 180°C for 25 min. in drying cabinet), more preferably 30 to 50% by wt., particularly preferably 35 to 45% by wt.

The degree of conversion (calculated from the solid content of a sample and the mass of the substances used) of the monomers used in the emulsion polymerization preferably is larger than 50%, more preferably larger than 60%, particularly preferably larger than 70%, very particularly preferably larger than 80%, in each case based on the sum of monomers. Moreover, the degree of conversion of the monomers used is preferably lower than 99%, more preferably lower than 97%, particularly preferably lower than 96%, very particularly preferably lower than 95%, in each case based on the sum of monomers.

Preparation of the agglomerated butadiene rubber latex (A1)

In step b) of the process according to the invention said at least one starting butadiene rubber latex (S-A1) is subjected to agglomeration, preferably by addition of an organic acid, to obtain at least one agglomerated butadiene rubber latex (A1) with a median weight particle diameter $D_{50}$ of 150 to 2000 nm (= graft substrate).

The median weight average particle diameter $D_{50}$ of the agglomerated rubber latices is preferably 160 to 1000 nm, more preferably 170 to 800 nm, more preferred 200 to 600 nm, preferred 250 to 500 nm, very preferred 300 to 400 nm.

Preferably agglomeration of the starting butadiene rubber latex (S-A1) is carried out by the addition of at least one organic acid, in particular carboxylic acid, preferably organic acid anhydride, more preferably carboxylic acid anhydride, and still more preferably acetic anhydride.

Production of the agglomerated rubber latices (A1) is preferably carried out by mixing the starting butadiene rubber latices with the afore-mentioned acids and/or acid anhydrides.

After agglomeration is complete, preferably restabilization with a base preferably potassium hydroxide solution is carried out.

Preferably, acetic anhydride is used for agglomeration. However, other organic anhydrides can also be used.

It is also possible to use mixtures of acetic anhydride with acetic acid or mixtures of organic anhydrides with acetic acid or other carboxylic acids.

Once the agglomeration is complete, the agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5, in order to minimize the formation of coagulum and to increase the formation of a stable agglomerated rubber latex (A1) with a uniform particle size. As further emulsifier preferably rosin-acid based emulsifiers as described above in step a) are used. The pH value is adjusted by use of bases such as sodium hydroxide solution or preferably potassium hydroxide solution.

In a preferred embodiment of the process of the invention first, the starting rubber latex is provided, wherein, in a preferred form, the solid content of this latex is adjusted to at most 50% by wt., more preferably at most 45% by wt, and particularly preferably at most 40% by wt. by the addition of water. The temperature of the starting rubber latex, optionally mixed with water, can be adjusted in a broad range of from 0°C to 70°C, preferably of from 0°C to 60°C, and particularly preferably of from 15°C to 50°C. Preferably at this temperature, a mixture of preferably acetic anhydride and water, which was prepared by mixing, is added to the starting rubber latex under good mixing. The addition of the acetic anhydride-water mixture and the mixing with the starting rubber latex should take place within a time span of two minutes at most in order to keep the coagulate formation as small as possible. In the process of the invention the coagulate formation cannot be avoided completely, but the amount of coagulate can be limited advantageously by this measure to significantly less than 1 % by wt, generally to significantly less than 0.5% by wt based on the solids of the starting rubber latex used.

Preferably the mixing ratio of the organic acid anhydride-water mixture, in particular acetic anhydride-water mixture, used in the agglomeration step is 1 :5 to 1 :50 parts by mass, preferably 1 :7.5 to 1 :40, particularly preferably 1 :10 to 1 :30. When the organic acid anhydride-water mixture, preferably acetic anhydride-water mixture, is added, agglomeration of the fine-particle rubber particles within the starting butadiene rubber latex (S-A1) to form larger rubber particles starts and is finished after 5 to 60 minutes according to the adjusted temperature. The rubber latex is not stirred or mixed in this phase.

The agglomeration, the increase in size of the rubber particles, comes to a standstill when the entire amount of acetic anhydride is hydrolyzed and the pH value of the rubber latex does not drop any further.

Coagulate which has possibly formed is removed from the agglomerated rubber latex in particular by filtering (e.g. a filter with a mesh width of 50 pm).

Preparation of graft rubber copolymer (A)

In step c) of the process according to the invention styrene and acrylonitrile, preferably in a weight ratio of 95:5 to 65:35, more preferably 80:20 to 70:30, are polymerized by emulsion polymerization in presence of at least one agglomerated butadiene rubber latex (A1) to obtain a graft rubber copolymer (A) at a temperature of 40 to 90°C, it being possible for styrene and/or acrylonitrile to be replaced partially (less than 50 wt.-% based on the total amount of monomers used in step c))) by alpha-methylstyrene, methyl methacrylate, maleic anhydride or N-phenylmaleimide or mixtures thereof.

The preparation of the graft rubber polymers (A) may be carried out, as desired, by grafting of only one agglomerated butadiene rubber latex (A1) or by the common grafting of more than one agglomerated butadiene rubber lattices (A1) during one reaction.

Alternatively mixtures of graft rubber copolymers (A) can be obtained by first individual grafting of an agglomerated butadiene rubber latex (A1) (e.g. having different particle size) and then mixing the individually obtained graft rubber copolymers.

Step c) of the process according to the invention comprises sub-steps c1), c2) and c3).

Sub-steps c1), c2) and c3) comprised in step c) are carried out in the order first c1), then c2) and then c3).

Step c) is preferably carried out in one reactor.

Step c) is carried out at a temperature of 40 to 90°C, preferably 50 to 80°C, more preferably 60 to 75°C.

In step c) acrylonitrile and styrene - optionally independently replaced partially (less than 50 wt.-% based on the total amount of acrylonitrile and styrene) by alpha-methylstyrene, methyl methacrylate, maleic anhydride or N-phenylmaleimide or mixtures thereof - are used in a total amount of 15 to 60 wt.-%, preferably from 20 to 50 wt.-%, and the at least one agglomerated diene butadiene rubber latex (A1) is used in a total amount of 40 to 85 wt.-% , preferably from 50 to 80 wt.-% (in each case based on the solid).

Preferably styrene and acrylonitrile are not partially replaced by one of the afore-mentioned co-monomers; preferably styrene and acrylonitrile are polymerized alone in a weight ratio of 95:5 to 65:35, preferably 80:20 to 65:35.

In step c) as emulsifier there may be used conventional anionic emulsifiers such as alkyl sulfates, alkyl sulfonates, ar-alkyl sulfonates and soaps of saturated or unsaturated fatty acids as well as above mentioned resin acid-based emulsifiers or tall resin emulsifiers. Resin acid-based emulsifiers or tall resin emulsifiers are used preferably, resin acid-based emulsifiers (resin soaps) are in particular preferred.

Molecular-weight regulators may additionally be used in the graft polymerization step c) preferably in amounts of from 0.01 to 2 wt. %, particularly preferably in amounts of from 0.05 to 1 wt. % (in each case based on the total amount of monomers in the graft polymerization step). Suitable molecular-weight regulators are, for example, alkylmercaptans, such as n-dodecyimercaptan, tert- dodecylmercaptan (TDDM), dimeric alpha-methylstyrene, terpinols.

In the context of steps c1), c2) and c3) the term "styrene and acrylonitrile" means styrene and acrylonitrile which independently can be partially (less than 50 wt.-%) replaced by alpha-methylstyrene, methyl methacrylate, maleic anhydride or N-phenylmaleimide or mixtures thereof as hereinbefore defined in step c).

In step c1) - the so-called sludge feeding - in presence of the at least one agglomerated butadiene rubber latex (A1) 10 to 45 wt.-%, preferably 20 to 40 wt.-%, more preferably 25 to 30 wt.-%, of styrene and acrylonitrile - based on the total amount of styrene and acrylonitrile - are fed in one portion, and 0.01 to 0.06 parts by weight of at least one redox system initiator (I-1) selected from hydrogen peroxide or at least one organic peroxide - based on 100 parts by weight of styrene and acrylonitrile and rubber latex (A) - is added.

Preferably styrene and acrylonitrile are fed in one portion within 10 and 20 minutes.

In step c1) the addition of the redox system initiator (I-1) may be done simultaneously with or preferably after the feeding of styrene and acrylonitrile. The addition of the redox system initiator (I-1) may be done in at least one, preferably one, portion.

The redox system initiator (I-1) used in step c1) is hydrogen peroxide or at least one organic peroxide selected from the group consisting of di-tert-butyl peroxide, cumene hydroperoxide (CHP), dicyclohexyl percarbonate, tert-butyl hydroperoxide, p-menthane hydroperoxide, diisopropylbenzene hydroperoxide and dibenzoylperoxide. Organic peroxides are preferred, cumene hydroperoxide is in particular preferred.

Redox systems generally consist of an oxidizing agent and a reducing agent, it being possible for heavy metal ions (e.g. $Fe^{++}$) additionally to be present in the reaction medium (see Houben-Weyl, Methoden der Organischen Chemie, Volume 14/1, p. 263 to 297). In the process according to the invention the redox system initiator (I-1) is used as the oxidizing agent.

For the other components of the redox system comprising the redox system initiator (1-1), any reducing agent and metal component known from literature can be used. Preferably the redox system is an aqueous redox system comprising redox system initiator (1-1).

A particular preferred redox system comprises cumene hydroperoxide, dextrose and $FeSO_4$.

Preferably 0.03 to 0.05 parts by weight, more preferred about 0.04 parts by weight of the at least one redox system initiator (I-1) - based on 100 parts by weight of styrene and acrylonitrile and rubber latex (A) - are used in step c1).

Then, after the addition of initiator (I-1) in step c1), the polymerization is started and carried out for 30 to 90 minutes, preferably 45 to 75 minutes, to obtain a reaction mixture (RM-c1).

Then, in step c2), the so-called incremental feeding, preferably within 5 hours, more preferably within 3 hours, to the reaction mixture (RM-c1) obtained in step c1), the remaining amount of styrene and acrylonitrile - based on the total amount of styrene and acrylonitrile - is fed in portions or continuously, and 0.05 to 0.12 parts by weight of at least one redox system initiator (I-1) as afore-mentioned - based on 100 parts by weight of styrene and acrylonitrile and rubber latex (A) - is further added to obtain a reaction mixture (RM-c2).

Preferably, the feeding of the remaining amount of styrene and acrylonitrile is carried out in equally divided portions in regular intervals.

Generally in step c2) the addition of the redox system initiator (I-1) is done simultaneously with the feeding of styrene and acrylonitrile. In step c2) the addition of the redox system initiator (I-1) may be done in at least one portion or continuously (within preferably 5 hours, more preferably 3 hours).

Preferably 0.06 to 0.10 parts by weight, more preferred about 0.08 parts by weight, of the at least one redox system initiator (I-1) - based on 100 parts by weight of styrene and acrylonitrile and rubber latex (A) - are used in step c2).

Step c2) is preferably completed within 5 hours, more preferably within 3 hours.

Then, in step c3) - the so-called boost addition - to the reaction mixture (RM-c2) obtained in step c2) 0.05 to 0.40 parts by weight - based on 100 parts by weight of styrene and acrylonitrile and agglomerated butadiene rubber latex (A1) - of at least one inorganic free radical initiator (I-2) is added, and then, after the addition of initiator (I-2), polymerization is generally continued for 45 to 90 minutes, preferably 45 to 75 minutes, to obtain graft rubber copolymer (A).

Generally the inorganic free radical initiator (I-2) is added in one portion.

The at least one inorganic free radical initiator (I-2) is in particular an inorganic per-salt, preferably an alkali persulfate, more preferred potassium persulfate (KPS). Generally the inorganic free radical initiator (I-2) is water soluble.

Preferably 0.07 to 0.35 parts by weight, more preferred about 0.10 to 0.20 parts by weight, in particular 0.13 to 0.17 parts by weight, based on 100 parts by weight of styrene and acrylonitrile and agglomerated butadiene rubber latex (A1), of the at least one inorganic free radical initiator (I-2) are used in step c3).

The process according to the invention ensures that all available monomers take part in the polymerization reaction and help to achieve a higher conversion rate. The reactivity and decomposition rate of the inorganic free radical initiator (I-2) is also comparatively higher compared to organic redox system initiators used in prior art processes which also improves the conversion.

The work-up of the graft rubber copolymers (A) is carried out by common procedures, e.g. by coagulation with salts, e.g. Epsom salt and/or acids, washing, drying or by spray drying.

A further subject of the invention is a graft rubber copolymer obtained by the process according to the invention.

Thermoplastic Molding Compositions

A further subject of the invention is a thermoplastic molding composition comprising at least one graft rubber copolymer (A) obtained by the process according to the invention and at least one rubber-free vinylaromatic polymer (B).

Suitable rubber-free vinyl aromatic polymers (B) are in particular copolymers of styrene and acrylonitrile (SAN) in a weight ratio of from 95:5 to 50:50, preferably 78:22 to 55:45, more preferably 75:25 to 65:35, most preferred 72:28 to 70:30, it being possible for styrene and/or acrylonitrile to be replaced wholly or partially by alpha-methylstyrene, methyl methacrylate, maleic anhydride or N-phenylmaleimide. It is preferred that styrene and acrylonitrile are not replaced by one of the afore-mentioned comonomers. Preferred are SAN-copolymers of styrene and acrylonitrile alone.

Said SAN-copolymers preferably have weight average molecular weights Mw of from 85,000 to 250,000 g/mol, more preferably 100,000 to 225,000 g/mol.

The weight average molar mass $M_w$ is determined by GPC (solvent: tetrahydrofuran, polystyrene as polymer standard) with UV detection according to DIN 55672-1:2016-03.

Said SAN-copolymers often have a melt flow index (MFI) of 20 to 75 g/10 min (measured according to ASTM D 1238 (ISO 1133:1-2011) at 220°C and 10 kg load).

Details relating to the preparation of such resins are described, for example, in DE-A 2 420 358 and DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

In general, the thermoplastic molding composition according to the invention may comprise the graft rubber copolymer (A) in amounts of from 10 to 50 wt.-%, preferably from 15 to 45 wt.-%, more preferably from 20 to 40 wt.-%, and the rubber-free vinylaromatic polymer (B), preferably a copolymer of styrene and acrylonitrile, in amounts of from 50 to 90 wt.-%, preferably from 55 to 85 wt.-%, more preferably from 60 to 80 wt.-%. The sum of components (A) and (B) totals 100 wt.-%.

Optionally the thermoplastic molding composition according to the invention may comprise at least one additive and/or processing aid (C). If present, component (C) is generally used in amounts of 0.01 to 10 parts by weight, preferably 0.10 to 5.0 parts by weight, based on 100 parts by weight of the total of (A) + (B).

Suitable additives and/or processing aids are e.g. antioxidants, UV stabilizers, peroxide destroyers, antistatics, lubricants, release agents, flame retarding agents, fillers or reinforcing agents (glass fibers, carbon fibers, etc.) as well as colorants.

In addition to the mentioned polymer components (A) and (B), these polymer compositions according to the invention may contain further rubber-free thermoplastic resins (TP) not composed of vinyl monomers, such thermoplastic resins being used in amounts of up to 1000 parts by weight, preferably up to 700 parts by weight and particularly preferably up to 500 parts by weight (in each case based on 100 parts by weight of the total of (A) + (B).

The thermoplastic resins (TP) as the rubber-free copolymer in the thermoplastic molding compositions according to the invention which are used in addition to the mentioned polymer components (A) and (B), include for example polycondensation products, for example aromatic polycarbonates, aromatic polyester carbonates, polyesters, polyamides.

Suitable thermoplastic polycarbonates and polyester carbonates are known (see, for example, DE-A 1 495 626, DE-A 2 232 877, DE-A 2 703 376, DE-A 2 714 544, DE-A 3 000 610, DE-A 3 832 396, DE-A 3 077 934) and are further described in detail as well as suitable polyamides in WO 2012/022710 (p. 14 - 18) to which reference is in particular made.

The molding compositions according to the invention are produced by mixing graft rubber copolymer (A) according to the invention and the rubber-free vinylaromatic polymer (B) and, optionally, further polymers (TP) and conventional additives and/or processing aids (C) in conventional mixing apparatuses (preferably in multi-cylinder mills, mixing extruders or internal kneaders).

Accordingly, the invention also provides a process for the production of the thermoplastic molding compositions according to the invention, wherein components (A) and (B) and, optionally, further polymers (TP) and conventional additives and/or processing aids (C) are mixed and compounded and extruded at elevated temperature, generally at temperatures of from 150°C to 300°C. During the production, working up, further processing and final shaping, the required or useful additives and/or processing aids (C) can be added to the thermoplastic molding materials.

The final shaping can be carried out on commercially available processing machines, and comprises, for example, injection-molding processing, plate extrusion with optionally subsequent hot forming, cold forming, extrusion of tubes and profiles and calender processing.

The process according to the invention leads to a higher conversion of the graft polymerization reaction and a significant reduction in residual monomers present in the graft rubber copolymer (A).

Thermoplastic molding compositions according to the invention have a significantly reduced content of unreacted monomers (= residual monomers). The products obtained according to the process of the invention are environment-friendly without compromising any mechanical properties and application performance. On the other hand, the effluent treatment - which is known in the art and can be carried out by common procedures - is eased by lowered residual monomer in the effluent water.

A further subject of the invention is the use of graft rubber copolymers (A) obtained according to the process of the invention in the automotive sector, in particular for automotive interior applications, and the use of thermoplastic molding compositions according the invention in the automotive sector, in particular for automotive interior applications.

The invention is further illustrated by the examples and the claims.

Examples

Test Methods

Particle Size Dw/ $D_{50}$

For measuring the weight average particle size Dw (in particular the median weight particle diameter D50) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration.

The measurements were carried out at a rotational speed of the disc of 24,000 r.p.m. by injecting 0.1 mL of a diluted rubber dispersion into an aqueous 24% by wt. saccharose solution. The calculation of the weight average particle size Dw was performed by means of the formula

$$D_w = \text{sum} ( n_i * d_i^4 ) / \text{sum}( n_i * d_i^3 )$$

$n_i$: number of particles of diameter $d_i$.

Molar Mass $M_w$

The weight average molar mass $M_w$ is determined by GPC (solvent: tetrahydrofuran, polystyrene as polymer standard) with UV detection according to DIN 55672-1:2016-03.

Melt Flow Index (MFI) or Melt Flow Rate (MFR)

MFI/MFR test was performed on ABS pellets (ISO 1133 standard, ASTM 1238, 220°C/10 kg load) using a MFI-machine of CEAST, Italy.

Notched Izod Impact Strength (NIIS) Test

Izod impact tests were performed on molded and notched specimens (ASTM D 256 standard) using instrument of CEAST (part of Instron's product line), Italy.

Tensile Strength (TS) and Tensile Modulus (TM) Test

Tensile tests (ASTM D 638) were carried out at 23°C using a Universal testing Machine (UTM) of Instron, UK.

Flexural Strength (FS) and Flexural Modulus (FM) Test

Flexural tests (ASTM D 790 standard) were carried out at 23°C using a UTM of Lloyd Instruments, UK.

Heat deflection temperature (HDT)

Heat deflection temperature test was performed on injection molded specimen (ASTM D 648) using an instrument of Zwick Roell GmbH, Germany.

VICAT Softening Temperature (VST)

Vicat softening temperature test was performed on injection molded test specimen (ASTM D 1525-09 standard) using a machine of Zwick Roell GmbH, DE. Test was carried out at a heating rate of 120°C/hr (Method B) at 50 N loads.

Rockwell Hardness

Hardness of the injection molded test specimen (ISO - 2039/2-11) was carried out on Fuel Instruments and Engineers Pvt Ltd, India.

The norms and standards are the actual versions.

Analysis of Residuals

Residual analysis is carried out using a Gas Chromatograph with FID of Perkin Elmer, USA.

The following materials were used:

Component (A)

Fine-particle butadiene rubber latex (S-A1)

The fine-particle butadiene rubber latex (S-A1) which is used for the agglomeration step was produced by emulsion polymerization using tert-dodecylmercaptan as chain transfer agent and potassium persulfate as initiator at temperatures from 60° to 80°C. The addition of potassium persulfate marked the beginning of the polymerization. The fine-particle butadiene rubber latex (S-A1) was cooled below 50°C and the non-reacted monomers were removed partially under vacuum (200 to 500 mbar) at temperatures below 50°C which defines the end of the polymerization. Then the latex solids (in % per weight) were determined by evaporation of a sample at 180°C for 25 min. in a drying cabinet. The monomer conversion is calculated from the measured latex solids. The butadiene rubber latex (S-A1) is characterized by the following parameters, see table 1.

Latex S-A1-1

No seed latex is used. As emulsifier the potassium salt of a disproportionated rosin (amount of potassium dehydroabietate: 52 wt.-%, potassium abietate: 0 wt.-%) and as salt tetrasodium pyrophosphate is used.

Table 1: Composition of the butadiene rubber latex S-A1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt (wt.-% based on monomers) | 0.559 |
| Salt amount relative to the weight of solids of the rubber latex | 0.598 |
| Monomer conversion (%) | 89.3 |
| Dw (nm) | 87 |
| pH | 10.6 |
| Latex solids content (wt.-%) | 42.6 |

(continued)

| Latex | S-A1-1 |
|-------|--------|
| K | 0.91 |

$$K = W * (1 - 1.4 * S) * Dw$$

W = decomposed potassium persulfate [parts per 100 parts rubber]
S = salt amount in percent relative to the weight of solids of the rubber latex
Dw = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (S-A1) was determined. The solid content of the agglomerated butadiene rubber latex (A), the pH value und the median weight particle diameter $D_{50}$ was determined.

Table 2: Production of coarse-particle, agglomerated butadiene rubber latex(A1)

| latex A1 | | A1-1 | A1-2 |
|----------|---|------|------|
| used latex S-A1 | | S-A1-1 | S-A1-1 |
| concentration latex S-A1 before agglomeration | wt.-% | 37.4 | 37.4 |
| amount acetic anhydride | parts | 0.9 | 0.91 |
| amount KOH | parts | 0.81 | 0.82 |
| concentration KOH solution | wt.-% | 3 | 3 |
| solid content latex A1 | wt.-% | 32.5 | 32.5 |
| coagulate | parts | 0.01 | 0 |
| pH | | 9 | 9 |
| $D_{50}$ | nm | 315 | 328 |

Production of the graft rubber copolymers (A)

Table 3 shows the recipe for the grafting. The amount of the additional components - other than the main components including the butadiene rubber latex (A1) and acrylonitrile and styrene - are given in parts by weight (pbw) based on 100 parts by weight (of the sum of the total amount) of butadiene rubber latex (A1) and acrylonitrile and styrene monomer. The weight ratio of acrylonitrile and styrene is 26:74.

Table 3: Recipe for grafting

| grafting process | | Components (pbw) | | | | |
| --- | --- | --- | --- | --- | --- | --- |
| | | Comparative example 1 | Example 1 | Example 2 | Comparative Example 3 | Comparative example 2 |
| | | CHP Redox | CHP+KPS | CHP+KPS | KPS+CHP | KPS |
| | | Sludge feeding c1) | | | | |
| | Rubber Latex (A1) | 58.0 | 58 | 58 | 58 | 58 |
| | Acrylonitrile 26 wt.% | 3.12 | 3.12 | 3.12 | 3.12 | 3.12 |
| | Styrene 74 wt.% | 8.88 | 8.88 | 8.88 | 8.88 | 8.88 |
| | | | | | | |
| molecular-weight regulator | TDDM | 0.10 | 0.05 | 0.05 | 0.05 | 0.05 |
| | | | | | | |
| Emulsifier | Resin Soap | 0.259 | | 0.26 | 0.26 | 0.26 | 0.26 |
| | Water | 2.200 | | 2.2 | 2.2 | 2.2 | 2.2 |
| | | | | | | |
| Redox system | Water | 6.5800 | | 6.5800 | 6.5800 | |
| | Dextrose | 0.1521 | | 0.1521 | 0.1521 | |
| | TSPP** | 0.1190 | | 0.1190 | 0.1190 | |
| | $FeSO_4$ | 0.0034 | | 0.0034 | 0.0034 | |
| | | | | | | |
| Initiator | CHP | 0.040 | | 0.040 | 0.040 | |
| | KPS | | | | | 0.4 | 0.4 |
| Water | | 137.20 | | 137.2 | 137.2 | 137.2 | 137.2 |
| | | | | | | |

(continued)

| | | Incremental Feeding c2) | | | | |
|---|---|---|---|---|---|---|
| Incremental Feeding* | monomer mixture* | 54.661 | 54.66 | 54.66 | 54.66 | 54.66 |
| | CHP | 0.08000 | 0.08 | 0.08 | | |
| | | Boost Addition c3) | | | | |
| Redox system | Water | 5.650 | 5.650 | 5.650 | 5.650 | 5.650 |
| | Dextrose | 0.071 | | | 0.071 | |
| | TSPP | 0.055 | | | 0.055 | |
| | FeSO$_4$ | 0.0016 | | | 0.0016 | |
| Initiator | CHP | 0.0275 | | | 0.0275 | |
| | KPS | | 0.1 | 0.2 | | 0.1 |
| | *Incremental Feeding Ingredients (*monomer mixture for step c2) | | | | | |
| | Acrylonitrile 26% | 7.8 | 7.8 | 7.8 | 7.8 | 7.8 |
| | Styrene 74% | 22.2 | 22.2 | 22.2 | 22.2 | 22.2 |
| Emulsifier | Resin Soap | 0.598 | 0.598 | 0.598 | 0.598 | 0.598 |
| | Water | 6.95251 | 6.95251 | 6.95251 | 6.95251 | 6.95251 |
| | Total | 7.55097 | 7.55097 | 7.55097 | 7.55097 | 7.55097 |
| molecular-weight regulator | TDDM | 0.300 | 0.150 | 0.150 | 0.150 | 0.150 |
| Water | | 16.810 | 16.810 | 16.810 | 16.810 | 16.810 |
| **TSPP = tetrasodiumpyrophosphate | | | | | | |

Examples 1 and 2 (invention)

Mixtures (= latex A1) of the coarse-particle, agglomerated butadiene rubber latices A1-1 and A1-2 (ratio 50:50, calculated as solids of the rubber latices (A1)) were diluted with water to a solid content of 27.5 wt.-% and heated to 68°C in a reactor.

In the initial sludge feeding step c1), said reactor was flooded with styrene and acrylonitrile in the amounts given in Table 3 within 15 minutes. TDDM as molecular weight regulator was additionally added along with the monomer charge. At the same time when the monomer slug feed was completed, the polymerization was started by feeding cumene hydroperoxide (CHP) together with a potassium salt of disproportionated resin (amount of potassium dehydroabietate: 52 wt.-%, potassium abietate: 0 wt.-%) as aqueous solution and separately an aqueous solution of dextrose, tetrasodium pyrophosphate (TSPP) and iron-(II)-sulfate were fed to the reactor within 5 minutes. The temperature was kept at 68°C. The polymerization was carried out for one further hour.

Then, in the incremental feeding step c2) to the reaction mixture obtained in step c1), the remaining amount of styrene and acrylonitrile (see Table 3) was fed in equally divided portions in regular intervals within 3 hours and simultaneously further CHP as redox system in amounts according to Table 3 was added within 180 minutes. Further emulsifier and TDDM was also added. This incremental feeding of monomers increases the graft ratio and improves the conversion. The temperature was kept at 68°C. The incremental feeding was completed within 3 hours.

In the final boost addition grafting step c3) to the reaction mixture obtained in step c2), potassium persulfate (KPS) was added within 10 minutes in the amounts given in Table 3. Then, after addition of KPS the polymerization was continued for one further hour. The temperature was kept at 68°C. This boost addition of KPS as initiator ensures maximum conversion.

Then, the obtained graft rubber latex (= graft rubber copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%).

Samples A-2 and A-3 of graft rubber copolymer A were obtained according to said process.

Comparative Examples 1 and 2 (samples A1 and A5) are regular ABS graft rubber copolymer powders. The samples A1 and A5 were prepared by general grafting methods using a particular initiator (cp. Table 3).

Comparative Example 1

Mixtures (= latex A1) of the coarse-particle, agglomerated butadiene rubber latices A1-1 and A1-2 (ratio 50:50, calculated as solids of the rubber latices (A1)) were diluted with water to a solid content of 27.5 wt.-% and heated to 68°C in a reactor. Grafting steps c1) and c2) were carried out in accordance with inventive Examples 1 and 2, but in step C3 (boost charging) CHP and a redox system were added in a single portion (amounts see Table 3). Then, the polymerization was continued for one further hour. The reaction conditions of step c3) are as described for inventive Examples 1 and 2 above.

Comparative Example 2

Mixtures (= latex A1) of the coarse-particle, agglomerated butadiene rubber latices A1-1 and A1-2 (ratio 50:50, calculated as solids of the rubber latices (A1)) were diluted with water to a solid content of 27.5 wt.-% and heated to 68°C in a reactor. Then for grafting in the sludge feeding step c1) KPS was used as initiator (reaction medium and amounts see Table 3). The amounts of the rubber latex (A1) and of the monomers are the same as in inventive Examples 1 and 2. Post sludge feeding, no hold up was given and in the following incremental feeding step c2), the entire portion of remaining monomer (see Table 3) was fed in regular intervals and in equally divided proportions, but no further initiator was added. The entire step is completed in 4 hours. In the boost charging step c3) potassium persulphate was added to the reaction vessel (see Table 3).

Then, the polymerization was continued for one further hour. All other reaction conditions of the grafting steps c1) to c3) are as described for inventive Examples 1 and 2 above.

Comparative Example 3

Mixtures (= latex A1) of the coarse-particle, agglomerated butadiene rubber latices A1-1 and A1-2 (ratio 50:50, calculated as solids of the rubber latices (A1)) were diluted with water to a solid content of 27.5 wt.-% and heated to 68°C in a reactor.

Then for grafting in the sludge feeding step c1) KPS was used as initiator (reaction medium and amounts see Table 3). The amounts of the rubber latex (A1) and of the monomers are the same as in inventive Examples 1 and 2.

Post sludge feeding, no hold up was given and in the following incremental feeding step c2), the entire portion of remaining monomer (see Table 3) was fed in regular intervals and in equally divided proportions, but no further initiator was added. The entire step was completed in 4 hours. In the boost charging step c3) CHP and a redox system were added to the reaction vessel in one portion (amounts see Table 3). Then, the polymerization was continued for one further hour. All other reaction conditions of the grafting steps c1) to c3) are as described for inventive Examples 1 and 2 above.

Table 4: Analysis of the residuals

| Graft rubber copolymer | Initiator | ppm of Component | | | Total |
|---|---|---|---|---|---|
| | | AN | VCH* | Styrene | |
| Comparative Example1 | CHP | 249 | 107 | 8112 | 8468 |
| Example1 | CHP- KPS | 273 | 146 | 3819 | 4238 |
| Example 2 | CHP- KPS | 460 | 124 | 3039 | 3623 |
| Comparative Example 3 | KPS + CHP | 379 | 112 | 2011 | 2501 |
| Comparative Example2 | KPS | 257 | 105 | 2944 | 3306 |
| * VCH =vinyl cyclohexane | | | | | |

Table 4 shows that the total content of the residuals, in particular the residual monomers, of the graft rubber copolymers A-2 and A-3 of inventive examples 1 and 2 is significantly lower than in comparative example 1. The inventive process ensures that all available monomers take part in the polymerization reaction and help to achieve a higher conversion rate. The reactivity and decomposition rate of KPS - used in the final grafting step c3) - is also comparatively higher compared to CHP which also improves the conversion.

The graft rubber copolymers A-5 of comparative example 2 formed with only a KPS initiator show also a substantial reduction in residuals but the core rubber gets highly cross-linked. This undesirably affects all the mechanical properties of the final ABS molding compositions (cp. Tables 7 and 8). In contrast the graft rubber copolymers A-2 and A-3 of inventive examples 1 and 2 have no adverse effect on the mechanical properties of the final ABS molding compositions (cp. Tables 7 and 8) due to optimized formation of crosslinks. Thus, it was surprisingly found that adding KPS only in the boost addition step does not have any impact on crosslinking related mechanical property reduction of the final ABS molding compositions.

The lowest total content of residuals is obtained for graft rubber copolymer A-4 of comparative example 3. However, the obtained rubber morphology typically with higher cross linking in the core is disadvantageous and the mechanical properties of the final ABS molding compositions are also undesirably affected (cp. Tables 7 and 8).

Component (B)

B-1: Statistical copolymer from styrene and acrylonitrile with a ratio of polymerized styrene to acrylonitrile of 73:27 with a weight average molecular weight Mw of 107,000 g/mol, a polydispersity of Mw/Mn of 2.4 and a melt flow rate (MFR) (220°C/10 kg load) of 65 g/10 minutes, produced by free radical solution polymerization.
B-2: Statistical copolymer from styrene and acrylonitrile with a ratio of polymerized styrene to acrylonitrile of 71:29 with a weight average molecular weight Mw of 140,000 g/mol, a polydispersity of Mw/Mn of 2.5 and a melt flow rate (MFR) (220°C/10 kg load) of 30 g/10 minutes, produced by free radical solution polymerization.

Additives/Processing aids (C)

C-1: Ethylene bis-stearamide with trade name 'Palmowax' obtained from Palmamide Sdn Bhd, Malaysia
C-2: distearylpentaerythrityldiphosphite (SPEP) from Addivant, Switzerland
C 3: Silicon oil having a kinematic viscosity of 1000 centi Stokes obtained from KK Chempro India Pvt Ltd
C 4: Magnesium Stearate from Sunshine organics
C 5: Metal oxide received from Kyowa Chemicals.

Thermoplastic compositions

Each sample A-1 to A-5 of graft rubber polymers (A), SAN-copolymer (B-I) or (B-2), and the afore-mentioned further components were mixed (composition of polymer blend see Tables 5 and 6, batch size 5 kg) for 2 minutes in a high speed mixer to obtain good dispersion and a uniform premix and then said premix was melt blended in a twin-screw extruder at a speed of 80 rpm and using an incremental temperature profile from 190 to 220° C for the different barrel zones. The extruded strands were cooled in a water bath, air-dried and pelletized. For the mechanical tests standard test specimens (ASTM test bars) of the obtained blend were injection moulded at a temperature of 190 to 230°C.

Table 5: Composition of ABS molding compound set 1

| Grade | Formulation | | | | |
|---|---|---|---|---|---|
| Resins | Comparative Example1 | Example1 | Example2 | Comparative Examples3 | Comparative Example2 |
| A-1 (CHP+ CHP boost) | 27.4 | | | | |
| A-2 (CHP+ KPS (0.1) boost) | | 27.4 | | | |
| A-3 (CHP+ KPS (0.2) boost) | | | 27.4 | | |
| A-4 (KPS + CHP boost) | | | | 27.4 | |
| A-5 (KPS+ KPS (0.1) boost) | | | | | 27.4 |
| B-1 (SAN-copolymer) | 70.45 | 70.45 | 70.45 | 70.45 | 70.45 |
| | | | | | |
| C-1 (Ethylene Bis Stearamide) | 1.47 | 1.47 | 1.47 | 1.47 | 1.47 |
| C-2 (Distearyl penta erythrol diphosphate) | 0.147 | 0.147 | 0.147 | 0.147 | 0.147 |
| C-3 (silicon oil-1000 cst) | 0.147 | 0.147 | 0.147 | 0.147 | 0.147 |
| C-4 (Magnesium Stearate) | 0.294 | 0.294 | 0.294 | 0.294 | 0.294 |
| C-5 (Magnesium Oxide) | 0.098 | 0.098 | 0.098 | 0.098 | 0.098 |

Table 6: Composition of ABS molding compound set 2

| Grade | Formulation | | | | |
|---|---|---|---|---|---|
| Resins | Comparative Example1 | Example1 | Example2 | Comparative Examples3 | Comparative Example2 |
| A-1 (CHP+ CHP boost) | 37 | | | | |
| A-2 (CHP+ KPS (0.1) boost) | | 37 | | | |
| A-3 (CHP+ KPS (0.2) boost) | | | 37 | | |
| A-4 (KPS + CHP boost) | | | | 37 | |
| A-5 (KPS+ KPS (0.1) boost) | | | | | 37 |
| B-2 ( SAN-copolymer) | 60.3 | 60.3 | 60.3 | 60.3 | 60.3 |

(continued)

| Additives | | | | | |
|---|---|---|---|---|---|
| C-1 (Ethylene Bis Stearamide) | 1.95 | 1.95 | 1.95 | 1.95 | 1.95 |
| C-2 (Distearyl penta erythrol diphosphate) | 0.19 | 0.19 | 0.19 | 0.19 | 0.19 |
| C-3 (silicon oil-1000 cst) | 0.15 | 0.15 | 0.15 | 0.15 | 0.15 |
| C-4 (Magnesium Stearate) | 0.292 | 0.292 | 0.292 | 0.292 | 0.292 |
| C-5 (Magnesium Oxide) | 0.098 | 0.098 | 0.098 | 0.098 | 0.098 |

The mechanical test results, MFR, Vicat Softening Temperature (VST), Heat deflection temperature (HDT) and Rockwell Hardness of the compositions are presented in Tables 7 and 8.

Table 7: Properties of ABS molding compound set 1

| Recipe/Properties | | Absolac 300 (Compound Set 1) | | | | | |
|---|---|---|---|---|---|---|---|
| | | Spec | Comparative Example1 | Example1 | Example2 | Comparative Example3 | Comparative Example2 |
| | | | CHP Grafting | CHP+KPS (0.1) grafting | CHP+KPS (0.2) grafting | KPS + CHP grafting | KPS grafting |
| (by FTIR) % AN | | | 23.2 | 23.3 | 23.7 | 23.8 | 23.4 |
| % BD | | | 14.5 | 13.9 | 13.4 | 13.7 | 14.4 |
| % ST | | | 62.3 | 62.8 | 62.9 | 62.5 | 32.1 |
| MFR, g/ 10 min, 220°C, 10 kg load | | 30 - 40 | 37 | 37 | 38.0 | 41.5 | 36 |
| NilS, 6.4mm, kg.cm/cm, at 23 °C | 18 - 24 | 23 | 21 | 20.5 | 12.5 | 14.5 | |
| NIIS, 3.2mm, kg.cm/cm, at 23 °C | | 32.5 | 29.0 | 27.0 | 19 | 26.5 | |
| TS, kg/cm$^2$, 50 mm/min, | 475 - 575 | 502 | 493.5 | 510 | 485 | 480.9 | |
| TM, kg/cm2, 50 mm/min, | 25K- 29K | 25,123 | 25,382 | 26,600 | 26,200 | 25430 | |
| EB, %, 50 mm/min, | | 17.4 | 18.2 | 20 | 25 | 20.4 | |
| FS, kg/cm$^2$, 5 mm/min, | 700 - 800 | 845.4 | 837 | 865 | 855 | 827 | |
| FM, kg/cm$^2$, 5mm/min, | 24K- 28K | 28,155 | 28,269 | 29,150 | 28,700 | 28491 | |
| Rockwell Hardness, R - Scale, | 100-110 | 109 | 108 | 109 | 109 | 108.5 | |

(continued)

| Recipe/Properties | | Absolac 300 (Compound Set 1) | | | | | |
|---|---|---|---|---|---|---|---|
| | | Spec | Comparative Example1 | Example1 | Example2 | Comparative Example3 | Comparative Example2 |
| | | | CHP Grafting | CHP+KPS (0.1) grafting | CHP+KPS (0.2) grafting | KPS + CHP grafting | KPS grafting |
| HDT, °C, 1.82 MPa, Annealed | 89 - 95 | 98.5 | 97.5 | 97 | 96.5 | 98.5 | |
| VST, °C, 50 N, 120 °C / hr | ~ 97 | 100.5 | 100 | 99.5 | 100 | 100.5 | |

Table 8: Properties of ABS molding compound set 2

| Recipe/ Properties | Absolac | Absolac 100 (Compound Set 2) | | | | |
|---|---|---|---|---|---|---|
| | | Comparative Example1 | Example1 | Example2 | Comparative Example3 | Comparative Example2 |
| | Spec | CHP grafting | CHP+ KPS (0.1) grafting | CHP+ KPS (0.2) Grafing | KPS + CHP grafting | KPS grafting |
| BY FTIR % AN | | 23.3 | 23.1 | 23.4 | 22.4 | 23.2 |
| % BD | | 19.8 | 19.2 | 18.3 | 20.2 | 18.7 |
| % ST | | 56.9 | 57.7 | 58.3 | 57.4 | 58.1 |
| MFR, gm / 10 min, 220°C, 10 kg load | 10-14 | 13 | 12.5 | 12.0 | 14.5 | 15 |
| NilS, 6.4mm, kg.cm/cm, at 23 °C | Min. 38 | 41.5 | 40.0 | 38.0 | 36.0 | 35.0 |
| NilS, 3.2mm, kg.cm/cm, at 23 °C | | 48.5 | 49.5 | 47.5 | 44.5 | 47.0 |
| TS, kg/cm$^2$, 50 mm/min, | 375 - 475 | 452 | 456 | 465 | 455 | \|467 |
| TM, kg/cm2, 50 mm/min, | 19.5K- 24.5K | 22,573 | 22,463 | 22650 | 23,100 | 23,552 |
| EB, %, 50 mm/min, | | 20 | 23 | 24 | 23 | 25 |
| FS, kg/cm$^2$, 5 mm/min, | 575 - 675 | 752 | 760 | 780 | 765 | 781 |
| FM, kg/cm$^2$, 5mm/min, | 19.5K- 22.5K | 24,185 | 24,342 | 24,700 | 24,100 | 25,153 |
| Rockwell Hardness, R - Scale, | 90 - 100 | 100 | 100 | 100 | 101 | 102 |

(continued)

| Recipe/ Properties | Absolac | Absolac 100 (Compound Set 2) | | | | |
|---|---|---|---|---|---|---|
| | | Comparative Example1 | Example1 | Example2 | Comparative Example3 | Comparative Example2 |
| | Spec | CHP grafting | CHP+ KPS (0.1) grafting | CHP+ KPS (0.2) Grafing | KPS + CHP grafting | KPS grafting |
| HDT, °C, 1.82 MPa, annealed | 89-95 | 97 | 98 | 97.5 | 96.5 | 97 |
| VST, °C, 50 N, 120 °C / hr, | ~ 96 | 97.5 | 98 | 98.5 | 98.5 | 99 |

The results shown in Table 4 and Tables 7 and 8 clearly prove that the ABS molding compositions comprising graft copolymers A-2 or A-3 of inventive examples 1 and 2 have a significant reduction of residuals while maintaining good mechanical properties.

This effect can be achieved with the combination of two different specific initiators in the grafting step. It has been shown that individual initiators in the grafting step (cp. comparative example 1) results in inferior residuals or adverse property change (cp. comparative example 2). Also the sequence of initiators is of importance otherwise there will be different rubber morphology typically with higher cross link in the core which leads to inferior mechanical properties (cp. comparative example 3).

The products obtained according to the inventive process clearly demonstrate the process robustness since no coagulum or other structural disproportionation or any property deterioration has been found.

## Claims

1. Process for the preparation of a graft rubber copolymer (A), which process comprises the following steps:

a) emulsion polymerization of butadiene or a mixture of butadiene and at least one monomer copolymerizable with butadiene to obtain at least one starting butadiene rubber latex (S-A1) having a median weight particle diameter $D_{50}$ of equal to or less than 120 nm;

b) subjecting of said at least one starting butadiene rubber latex (S-A1) to agglomeration to obtain at least one agglomerated butadiene rubber latex (A1) with a median weight particle diameter $D_{50}$ of 150 to 2000 nm, wherein $D_{50}$ is measured with a disc centrifuge as specified in the description;

c) grafting of said at least one agglomerated butadiene rubber latex (A1) by emulsion polymerization of styrene and acrylonitrile in presence of the agglomerated butadiene rubber latex (A1) to obtain a graft rubber copolymer (A) at a temperature of 40 to 90°C, it being possible for styrene and/or acrylonitrile to be replaced partially (less than 50 wt.-%) by alpha-methylstyrene, methyl methacrylate, maleic anhydride or N-phenylmaleimide or mixtures thereof;

wherein step c) comprises sub-steps c1), c2) and c3):

c1):

• feeding of 10 to 45 wt.-% of styrene and acrylonitrile - based on the total amount of styrene and acrylonitrile - in one portion to the at least one agglomerated butadiene rubber latex (A1), and
• addition of 0.01 to 0.06 parts by weight of at least one redox system initiator (I-1) - selected from hydrogen peroxide or at least one organic peroxide - based on 100 parts by weight of styrene and acrylonitrile and agglomerated butadiene rubber latex (A1) - used in a redox system as oxidizing agent, then
• polymerization for 30 to 90 minutes;

c2):
then, to the reaction mixture obtained in step c1),

• feeding the remaining amount of styrene and acrylonitrile - based on the total amount of styrene and acrylonitrile - in portions or continuously, and
• further addition of 0.05 to 0.12 parts by weight of said at least one redox system initiator (I-1) - based on 100 parts by weight of styrene and acrylonitrile and agglomerated butadiene rubber latex (A1) -;

c3):
then, to the reaction mixture obtained in step c2),

• addition of 0.05 to 0.40 parts by weight - based on 100 parts by weight of styrene and acrylonitrile and agglomerated butadiene rubber latex (A1) - of at least one inorganic free radical initiator (I-2);
and then
• continuation of the polymerization for 30 to 90 minutes.

2. Process according to claim 1, wherein the redox system initiator (I-1) is at least one organic peroxide selected from the group consisting of di-tert-butyl peroxide, cumene hydroperoxide, dicyclohexyl percarbonate, tert-butyl hydroperoxide, p-menthane hydroperoxide, diisopropylbenzene hydroperoxide and dibenzoylperoxide.

3. Process according to claim 1 or 2, wherein the redox system initiator (I-1) is cumene hydroperoxide.

4. Process according to any of claims 1 to 3, wherein the inorganic free radical initiator (I-2) is a persulfate, preferably potassium persulfate.

5. Process according to any of claims 1 to 4, wherein in sub-step c2) the feeding of the remaining amount of styrene and acrylonitrile is carried out in equally divided portions in regular intervals.

6. Process according to any of claims 1 to 5, wherein sub-step c2) is completed within 5 hours, preferably within 3 hours.

7. Process according to any of claims 1 to 6, wherein in sub-step c2) 20 to 40 wt.-%, preferably 25 to 30 wt.-% of styrene and acrylonitrile - based on the total amount of styrene and acrylonitrile - are fed.

8. Process according to any of claims 1 to 7, wherein in step c) styrene and acrylonitrile are not partially replaced and are polymerized alone.

9. Process according to any of claims 1 to 8, wherein in step a) the at least one starting butadiene rubber latex (S-A1) is obtained by emulsion polymerization butadiene or a mixture of butadiene and styrene, preferably a mixture of butadiene and 1 to 30 wt.-% styrene.

10. Process according to any of claims 1 to 9, wherein in step a) and preferably in step c) at least one resin acid-based emulsifier is used for the emulsion polymerization.

11. Process according to any of claims 1 to 10, wherein in step b) an organic acid, preferably organic acid anhydride, more preferably acetic acid anhydride is used for the agglomeration.

12. Process according to any of claims 1 to 11, wherein in step c) acrylonitrile and styrene in a weight ratio of 95:5 to 65:35 are used in a total amount of 15 to 60 wt.-%, and the at least one agglomerated butadiene rubber latex (A1) is used in a total amount of 40 to 85 wt.-% (in each case based on the solid).

13. Process according to any of claims 1 to 12, wherein step c) is carried out in one reactor.

14. Graft rubber copolymer (A) obtained by the process according to any of claims 1 to 13.

15. Thermoplastic molding composition comprising at least one graft rubber copolymer (A) according to claim 14 and at least one rubber-free vinylaromatic polymer (B).

16. Thermoplastic molding composition according to claim 15 comprising:

A) 10 to 50 wt.-% of at least one graft rubber copolymer (A) according claim 15;
B) 90 to 50 wt.-% of at least one copolymer of styrene and acrylonitrile - as thermoplastic polymer (B) - , preferably styrene and acrylonitrile, in a weight ratio of from 95:5 to 50:50, it being possible for styrene and/or acrylonitrile to be replaced wholly or partially by alpha-methylstyrene methyl methacrylate, maleic anhydride and/or N-phenylmaleimide, which copolymer has a weight average molar mass $M_w$ of 85,000 to 250,000 g/mol.

17. Use of graft rubber copolymers (A) according to claim 14 or of thermoplastic molding compositions according to claim 15 or 16 for applications in the automotive sector, in particular for automotive interior applications.

**Patentansprüche**

1. Verfahren zur Herstellung eines Pfropfkautschukcopolymers (A), das die folgenden Schritte umfasst:

a) Emulsionspolymerisation von Butadien oder einer Mischung aus Butadien und mindestens einem mit Butadien copolymerisierbaren Monomer, um mindestens einen Ausgangs-Butadienkautschuklatex (S-A1) mit einem Gewichtsmedian-Teilchendurchmesser D50 von 120 nm oder weniger zu erhalten;
b) Unterziehen des mindestens einen Ausgangs-Butadienkautschuklatex (S-A1) einer Agglomeration, um mindestens einen agglomerierten Butadienkautschuklatex (A1) mit einem Gewichtsmedian-Teilchendurchmesser D50 von 150 bis 2000 nm zu erhalten, wobei Dso mit einer Scheibenzentrifuge wie in der Beschreibung angegeben gemessen wird;
c) Pfropfen des mindestens einen agglomerierten Butadienkautschuklatex (A1) durch Emulsionspolymerisation von Styrol und Acrylnitril in Gegenwart des agglomerierten Butadienkautschuklatex (A1), um ein Pfropfkautschukcopolymer (A) bei einer Temperatur von 40 bis 90°C zu erhalten, wobei Styrol und/oder Acrylnitril teilweise (weniger als 50 Gew.-%) durch alpha-Methylstyrol, Methylmethacrylat, Maleinsäureanhydrid oder N-Phenylmaleinimid oder deren Mischungen ersetzt werden können;

wobei Schritt c) die Teilschritte c1), c2) und c3) umfasst:

c1):

• Zuführen von 10 bis 45 Gew.-% Styrol und Acrylnitril - bezogen auf die Gesamtmenge an Styrol und Acrylnitril - in einer Portion zu dem mindestens einen agglomerierten Butadienkautschuklatex (A1), und
• Zugabe von 0,01 bis 0,06 Gew.-Teilen mindestens eines Redoxsystem-Initiators (I-1) - ausgewählt aus Wasserstoffperoxid oder mindestens einem organischen Peroxid - bezogen auf 100 Gew.-Teile Styrol und Acrylnitril und agglomerierten Butadienkautschuklatex (A1) -, der in einem Redoxsystem als Oxidationsmittel verwendet wird, dann
• Polymerisation für 30 bis 90 Minuten;

c2):
dann, zu der in Schritt c1) erhaltenen Reaktionsmischung,

• Zuführen der Restmenge an Styrol und Acrylnitril - bezogen auf die Gesamtmenge an Styrol und Acrylnitril - in Portionen oder kontinuierlich, und
• weitere Zugabe von 0,05 bis 0,12 Gew.-Teilen des mindestens einen Redoxsystem-Initiators (I-1) - bezogen auf 100 Gew.-Teile Styrol und Acrylnitril und agglomerierten Butadienkautschuklatex (A1) -;

c3): dann, zu der in Schritt c2) erhaltenen Reaktionsmischung

• Zugabe von 0,05 bis 0,40 Gewichtsteilen - bezogen auf 100 Gewichtsteile Styrol und Acrylnitril und agglomerierten Butadienkautschuklatex (A1) - mindestens eines anorganischen Radikalinitiators (1-2); und dann
• Fortführung der Polymerisation für 30 bis 90 Minuten.

2. Verfahren gemäß Anspruch 1, wobei der Redoxsystem-Initiator (I-1) mindestens ein organisches Peroxid ist, ausgewählt aus der Gruppe bestehend aus Di-tert-butylperoxid, Cumolhydroperoxid, Dicyclohexylpercarbonat, tert-Butylhydroperoxid, p-Menthanhydroperoxid, Diisopropylbenzolhydroperoxid und Dibenzoylperoxid.

3. Verfahren gemäß Anspruch 1 oder 2, wobei der Redoxsystem-Initiator (I-1) Cumolhydroperoxid ist.

**4.** Verfahren gemäß einem der Ansprüche 1 bis 3, wobei der anorganische Radikalinitiator (I-2) ein Persulfat, vorzugsweise Kaliumpersulfat, ist.

**5.** Verfahren gemäß einem der Ansprüche 1 bis 4, wobei in Teilschritt c2) die Zuführung der Restmenge an Styrol und Acrylnitril in gleichmäßig verteilten Portionen in regelmäßigen Abständen durchgeführt wird.

**6.** Verfahren gemäß einem der Ansprüche 1 bis 5, wobei der Teilschritt c2) innerhalb von 5 Stunden, vorzugsweise innerhalb von 3 Stunden, abgeschlossen wird.

**7.** Verfahren gemäß einem der Ansprüche 1 bis 6, wobei in Teilschritt c2) 20 bis 40 Gew.-%, vorzugsweise 25 bis 30 Gew.-% Styrol und Acrylnitril - bezogen auf die Gesamtmenge an Styrol und Acrylnitril - zugeführt werden.

**8.** Verfahren gemäß einem der Ansprüche 1 bis 7, wobei in Schritt c) Styrol und Acrylnitril nicht teilweise ausgetauscht werden und allein polymerisiert werden.

**9.** Verfahren gemäß einem der Ansprüche 1 bis 8, wobei in Schritt a) der mindestens eine Ausgangs-Butadienkautschuklatex (S-A1) durch Emulsionspolymerisation von Butadien oder einer Mischung aus Butadien und Styrol, vorzugsweise einer Mischung aus Butadien und 1 bis 30 Gew.-% Styrol, gewonnen wird.

**10.** Verfahren gemäß einem der Ansprüche 1 bis 9, wobei in Schritt a) und vorzugsweise in Schritt c) mindestens ein Emulgator auf Harzsäurebasis für die Emulsionspolymerisation verwendet wird.

**11.** Verfahren gemäß einem der Ansprüche 1 bis 10, wobei in Schritt b) eine organische Säure, vorzugsweise ein organisches Säureanhydrid, besonders bevorzugt Essigsäureanhydrid, für die Agglomeration verwendet wird.

**12.** Verfahren gemäß einem der Ansprüche 1 bis 11, wobei in Schritt c) Acrylnitril und Styrol in einem Gewichtsverhältnis von 95:5 bis 65:35 in einer Gesamtmenge von 15 bis 60 Gew.-% und der mindestens eine agglomerierte Butadienkautschuklatex (A1) in einer Gesamtmenge von 40 bis 85 Gew.-% (jeweils bezogen auf den Feststoff) eingesetzt werden.

**13.** Verfahren gemäß einem der Ansprüche 1 bis 12, wobei Schritt c) in einem Reaktor durchgeführt wird.

**14.** Pfropfkautschukcopolymer (A), erhalten durch das Verfahren gemäß einem der Ansprüche 1 bis 13.

**15.** Thermoplastische Formmasse, enthaltend mindestens ein Pfropfkautschukcopolymer (A) gemäß Anspruch 14 und mindestens ein kautschukfreies vinylaromatisches Polymer (B).

**16.** Thermoplastische Formmasse gemäß Anspruch 15, enthaltend:

A) 10 bis 50 Gew.-% mindestens eines Pfropfkautschukcopolymers (A) gemäß Anspruch 15;
B) 90 bis 50 Gew.-% mindestens eines Copolymers aus Styrol und Acrylnitril - als thermoplastisches Polymer (B) -, vorzugsweise Styrol und Acrylnitril, im Gewichtsverhältnis von 95:5 bis 50:50, wobei Styrol und/oder Acrylnitril ganz oder teilweise durch alpha-Methylstyrol, methylmethacrylat, Maleinsäureanhydrid und/oder N-Phenylmaleinimid ersetzt sein können, welches Copolymer eine gewichtsmittlere Molmasse $M_w$ von 85.000 bis 250.000 g/mol aufweist.

**17.** Verwendung von Pfropfkautschuk-Copolymeren (A) gemäß Anspruch 14 oder von thermoplastischen Formmassen gemäß Anspruch 15 oder 16 für Anwendungen im Automobilbereich, insbesondere für Anwendungen im Automobilinnenraum.

**Revendications**

**1.** Procédé pour la préparation d'un copolymère de caoutchouc greffé (A), lequel procédé comprend les étapes suivantes :

a) polymérisation en émulsion de butadiène ou d'un mélange de butadiène et d'au moins un monomère copolymérisable avec le butadiène pour obtenir au moins un latex de caoutchouc de butadiène de départ (S-A1) ayant un diamètre médian de particule en poids $D_{50}$ égal ou inférieur à 120 nm ;

b) soumission dudit au moins un latex de caoutchouc de butadiène de départ (S-A1) à une agglomération pour obtenir au moins un latex de caoutchouc de butadiène aggloméré (A1) doté d'un diamètre médian de particule en poids $D_{50}$ de 150 à 2 000 nm, $D_{50}$ étant mesuré avec une centrifugeuse à disque comme spécifié dans la description ;

c) greffage dudit au moins un latex de caoutchouc de butadiène aggloméré (A1) par polymérisation en émulsion de styrène et d'acrylonitrile en présence ou latex de caoutchouc de butadiène aggloméré (A1) pour obtenir un copolymère de caoutchouc greffé (A) à une température de 40 à 90 °C, le styrène et/ou l'acrylonitrile pouvant être remplacé(s) partiellement (moins de 50 % en poids) par de l'alpha-méthylstyrène, du méthacrylate de méthyle, de l'anhydride maléique ou du N-phénylmaléimide ou des mélanges correspondants ;

l'étape c) comprenant les sous-étapes c1), c2) et c3) :

c1) :

• alimentation de 10 à 45 % en poids de styrène et d'acrylonitrile - sur la base de la quantité totale de styrène et d'acrylonitrile - en une portion à l'au moins un latex de caoutchouc de butadiène aggloméré (A1), et
• ajout de 0,01 à 0,06 partie en poids d'au moins un initiateur de type système rédox (I-1) - choisi parmi le peroxyde d'hydrogène ou au moins un peroxyde organique - sur la base de 100 parties en poids de styrène et d'acrylonitrile et de latex de caoutchouc de butadiène aggloméré (A1) - utilisé dans un système rédox comme agent oxydant, puis
• polymérisation pendant 30 à 90 minutes ;

c2) :
puis, au mélange réactionnel obtenu dans l'étape c1),

• alimentation de la quantité restante de styrène et d'acrylonitrile - sur la base de la quantité totale de styrène et d'acrylonitrile - par portions ou de manière continue, et
• ajout supplémentaire de 0,05 à 0,12 partie en poids dudit au moins un initiateur de type système rédox (I-1) - sur la base de 100 parties en poids de styrène et d'acrylonitrile de latex de caoutchouc de butadiène aggloméré (A1) - ;

c3) :
puis, au mélange réactionnel obtenu dans l'étape c2),

• ajout de 0,05 à 0,40 partie en poids - sur la base de 100 parties en poids de styrène et d'acrylonitrile et de latex de caoutchouc de butadiène aggloméré (A1) - d'au moins un initiateur de radicaux libres inorganique (I-2) ; et puis
• continuation de la polymérisation pendant 30 à 90 minutes.

2. Procédé selon la revendication 1, l'initiateur de type système rédox (I-1) étant au moins un peroxyde organique choisi dans le groupe constitué par le peroxyde de di-tert-butyle, l'hydroperoxyde de cumène, le percarbonate de dicyclohexyle, l'hydroperoxyde de tert-butyle, l'hydroperoxyde de p-menthane, l'hydroperoxyde de diisopropylbenzène et le peroxyde de dibenzoyle.

3. Procédé selon la revendication 1 ou 2, l'initiateur de type système rédox (I-1) étant l'hydroperoxyde de cumène.

4. Procédé selon l'une quelconque des revendications 1 à 3, l'initiateur de radicaux libres inorganique (I-2) étant un persulfate, préférablement le persulfate de sodium.

5. Procédé selon l'une quelconque des revendications 1 à 4, dans la sous-étape c2) l'alimentation de la quantité restante de styrène et d'acrylonitrile étant réalisée en portion divisées de manière égale à intervalles réguliers.

6. Procédé selon l'une quelconque des revendications 1 à 5, la sous-étape c2) étant terminée dans les 5 heures, préférablement dans les 3 heures.

7. Procédé selon l'une quelconque des revendications 1 à 6, dans la sous-étape c2) 20 à 40 % en poids, préférablement 25 à 30 % en poids de styrène et d'acrylonitrile - sur la base de la quantité totale de styrène et d'acrylonitrile - étant alimentés.

8. Procédé selon l'une quelconque des revendications 1 à 7, dans l'étape c) le styrène et l'acrylonitrile n'étant pas partiellement remplacés et étant polymérisés seuls.

9. Procédé selon l'une quelconque des revendications 1 à 8, dans l'étape a) l'au moins un latex de caoutchouc de butadiène de départ (S-A1) étant obtenu par polymérisation en émulsion de butadiène ou d'un mélange de butadiène et de styrène, préférablement un mélange de butadiène et de 1 à 30 % en poids de styrène.

10. Procédé selon l'une quelconque des revendications 1 à 19, dans l'étape a) et préférablement dans l'étape c) au moins un émulsifiant à base d'acide de résine étant utilisé pour la polymérisation en émulsion.

11. Procédé selon l'une quelconque des revendications 1 à 10, dans l'étape b) un acide organique, préférablement un anhydride d'acide organique, plus préférablement l'anhydride d'acide acétique étant utilisé pour l'agglomération.

12. Procédé selon l'une quelconque des revendications 1 à 11, dans l'étape c) l'acrylonitrile et le styrène en un rapport en poids de 95 : 5 à 65 : 35 étant utilisés en une quantité totale de 15 à 60 % en poids, et l'au moins un latex de caoutchouc de butadiène aggloméré (A1) étant utilisé en une quantité totale de 40 à 85 % en poids (en chaque cas sur la base ou solide).

13. Procédé selon l'une quelconque des revendications 1 à 12, l'étape c) étant réalisée dans un réacteur.

14. Copolymère de caoutchouc greffé (A) obtenu par le procédé selon l'une quelconque des revendications 1 à 13.

15. Compositions de moulage thermoplastique comprenant au moins un copolymère de caoutchouc greffé (A) selon la revendication 14 et au moins un polymère vinylaromatique exempt de caoutchouc (B).

16. Compositions de moulage thermoplastique selon la revendication 15 comprenant :

A) 10 à 50 % en poids d'au moins un copolymère de caoutchouc greffé (A) selon la revendication 15 ;
B) 90 à 50 % en poids d'au moins un copolymère de styrène et d'acrylonitrile - en tant que polymère thermoplastique (B) -, préférablement de styrène et d'acrylonitrile, en un rapport en poids allant de 95 : 5 à 50 : 50, le styrène et/ou l'acrylonitrile pouvant être remplacé(s) entièrement ou partiellement par de l'alpha-méthylstyrène, ou méthacrylate de méthyle, de l'anhydride maléique et/ou du N-phénylmaléimide, lequel copolymère a une masse molaire moyenne en poids $M_w$ de 85 000 à 250 000 g/mole.

17. Utilisation de copolymères de caoutchouc greffés (A) selon la revendication 14 ou de compositions de moulage thermoplastiques selon la revendication 15 ou 16 pour des applications dans le secteur automobile, en particulier pour des applications d'intérieur d'automobile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4301264 A
- US 7897686 B
- US 20020111435 A
- WO 2012022710 A
- US 20030139514 A
- DE 2420358 A
- DE 2724360 A

- DE 1495626 A
- DE 2232877 A
- DE 2703376 A
- DE 2714544 A
- DE 3000610 A
- DE 3832396 A
- DE 3077934 A

**Non-patent literature cited in the description**

- **HOUBEN-WEYL.** *Methoden d. Organischen Chemie,* vol. 14 (1), 263-297
- Methoden der Organischen Chemie. **HOUBEN-WEYL.** Makromolekulare Stoffe. Thieme Verlag, 1961, 307

- **HOUBEN-WEYL.** *Methoden der Organischen Chemie,* vol. 14/1, 263-297
- Polystyrol [Polystyrene. Plastics Handbook. Carl-Hanser-Verlag, 1969, vol. V, 122